# EUROPÄISCHE PATENTSCHRIFT

(11) **EP 1 287 871 B1**
(45) Veröffentlichungstag und Bekanntmachung des Hinweises auf die Patenterteilung: **02.06.2004**
(21) Anmeldenummer: 02019000.5
(22) Anmeldetag: 27.08.2002
(51) Int. Cl.: B01D 29/21, B01D 35/30, B01D 35/14

(54) **Filtervorrichtung**
Filter device
Dispositif de filtrage

(30) Priorität: 31.08.2001 DE 10142775
(43) Veröffentlichungstag der Anmeldung: 05.03.2003
(73) Patentinhaber: Hydac Filtertechnik GmbH, 66280 Sulzbach/Saar (DE)
(72) Erfinder: Hennes, Stefan, 66540 Neunkirchen (DE); Sann, Norbert, 66292 Riegelsberg (DE); Sakraschinsky, Michael, 66386 St. Ingberg (DE)
(74) Vertreter: Patentanwälte Bartels und Partner

(56) Entgegenhaltungen:
- EP-A- 0 815 913
- WO-A-01/21278
- DE-A- 4 214 500
- DE-U- 29 915 843
- US-A- 5 753 116
- US-A- 5 888 384

## Beschreibung

Die Erfindung betrifft eine Filtervorrichtung mit den Merkmalen des Oberbegriffes des Patentanspruches 1.

Filtervorrichtungen zur Aufnahme von Filterelementen sind in einer Vielzahl von Ausführungsformen auf dem Markt frei erhältlich. Ein nicht unbedeutender Anteil der Herstellungskosten entfällt bei derartigen Filtervorrichtungen auf die Ausbildung der Halteeinrichtung zur lösbaren Fixierung des Filterelementes.
Bei einer in der EP 0 891 214 B1 aufgezeigten Filtervorrichtung der eingangs genannten Art weist die Halteeinrichtung eine Federanordnung aus zwei einander entgegenwirkenden Druckfedern auf, durch deren resultierende Federkraft ein am Filterelement angeordnetes Endstück, das als Dicht- und Halteelement fungiert, auf ein gehäuseseitiges Halteelement aufgeschoben wird, das durch einen sich in das Stützrohr des Filterelementes erstreckenden Stutzen am Kopf des Filtergehäuses gebildet ist.

Die verhältnismäßig aufwendige Bauweise der Halteeinrichtung führt zu hohen Herstellungskosten und die bekannten Lösungen erweisen sich als wenig montagefreundlich.

Demgemäß ist in dem DE-U-299 22 488 bereits ein montagefreundlicher Flüssigkeitsfilter mit Adapter vorgeschlagen worden mit einem topfartigen Filtergehäuse und mit einem das Filtergehäuse verschließenden, abnehmbaren Deckel sowie mit einem die eigentliche Filterfläche aufweisenden, auswechselbaren Filtereinsatz, wobei der Filtereinsatz lösbar mit dem Deckel des Gehäuses verbunden ist. Des weiteren weist die bekannte Lösung einen sich in den Fil= tereinsatz erstreckenden Stützdorn auf, wobei im Filtergehäuse als Adapter bezeichnete Anschluß- und Haltemittel für den Stützdorn vorgesehen sind, die in der Art von Haltefingern ausgebildet sind. Der Stützdorn ist bei der bekannten Lösung im Filtereinsatz lösbar gehalten, wobei eine erste Montagebaugruppe den Deckel, den Filtereinsatz und den Stützdorn aufweist und eine zweite Montagebaugruppe das Filtergehäuse und den Adapter mit den Haltefingern. Während der Montage der beiden Montagebaugruppen ist dann der Adapter mit dem Stützdorn fest verbunden und beim Wechsel des Filtereinsatzes verbleibt der Stützdorn im Filtergehäuse.

Durch die DE-A-196 26 648 (=EP-A-0 815 913) ist es darüber hinaus bekannt, einen Becherfilter ohne schwerkraftbedingte Leerlaufleitung mit einem auswechselbaren Filtereinsatz, einem Filterbecher mit aufsetzbarem Deckel und einer jeweils unten liegenden Zulauf- und Ablaufleitung auszustatten. Die bekannte Filterlösung weist einen oder mehrere Verdrängerkörper innerhalb des Filterbechers auf, die beim Filterwechsel mit entnehmbar sind. Hiermit ist erreicht, dass es zum Absenken des im Filterbecher befindlichen Fluids beim Öffnen desselben kommt, so dass sichergestellt ist, dass beim Wechsel des Filtereinsatzes weder Verletzungen der Bedienperson auftreten können noch Fluide in die Umwelt gelangen und dass des weiteren kein Fluid beim Filterwechsel verloren geht. Bei der dahingehend bekannten Lösung greifen einstükkig mit der oberen Endkappe des Filtereinsatzes verbundene Haltefinger mit Rastnasen in entsprechend zugehörige Ausnehmungen im Deckelteil ein und bilden dergestalt mit dem Filtergehäuse eine lösbare Rastverbindung. Außenumfangseitig sind die einzelnen Haltefinger bei der bekannten Lösung mit nach außen hin konisch abfallenden Versteifungsstegen versehen, was zwar zur Aussteifung der Haltefinger führt, damit aber auch die angestrebte Verrastung mit den zugehörigen Ausnehmungen im Deckelteil erschwert.

Bei den bekannten Lösungen nach dem deutschen Gebrauchsmuster sowie der Offenlegungsschrift sind die Haltefinger als längliche Einzelstege ausgebildet und im Querschnitt in der Längsachse des Filtergehäuses betrachtet ist dieser für jeden Haltefinger gleichbleibend, so dass dergestalt rechteckförmige Querschnittsflächen für die Haltefinger entstehen. Mithin werden bei einem Verrastungs- oder Schnappvorgang die Rastnasen an den freien Enden der Haltefinger entsprechend mit diesen weit zurückgebogen und aufgrund der genannten Querschnittsgeometrien kann es zum Abbrechen des jeweiligen Haltefingers kommen und mithin zu einem ungewollten Lösen der Schnappverbindung zwischen Filterelement und Filtergehäuse, auch wenn die dahingehenden Haltefinger aus einem elastisch nachgiebigen Kunststoffmaterial bestehen und auch wenn wie dargelegt bei der Lösung nach der Offenlegungsschrift die Rastnasen zum Filterelement hin mit Versteifungsstegen versehen sind. Des weiteren sind zum Herstellen und Lösen der Schnappverbindung relativ hohe Betätigungskräfte notwendig, so dass auch insoweit die bekannten Lösungen wenig montagefreundlich sind.

Durch die US-A-5,888,384 ist eine gattunsgemäße Filtervorrichtung bekannt mit einem topfartigen Filtergehäuse, einem in diesem aufnehmbaren Filterelement mit Stützrohr und einer zum lösbaren Festlegen des Filterelementes entlang seiner Längsachse im Filtergehäuse angeordneten Halteeinrichtung, die an der Innenseite des Filtergehäuses und am Filterelement ausgebildete, miteinander zusammenwirkende Halteelemente aufweist, wobei als Halteelemente eine am Filtergehäuse befindliche Aufnahme mit einer zumindest einer Rastfläche bildenden Hinterschneidung und an einem Ende des Filterelementes vorstehende, nachgiebige Haltefinger mit Rastnasen vorgesehen sind, die durch Verrasten mit der Rastfläche der Aufnahme eine lösbare Schnappverbindung bilden, wobei die Aufnahme am Boden des Filtergehäuses angeordnet ist, und wobei die Haltefinger an dem den Boden zugewandten Ende des Filterelementes vorstehen. Bei der dahingehend bekannten Lösung sind die Haltefinger wiederum als längliche Einzelstege ausgebildet, wobei die Haltefinger mit ihren am freien Ende angeordneten Rastnasen eine Verjüngung aufweisen, in die die Verrastungsfinger des Filtergehäusedeckels clipartig eingreifen. Außenumfangseitig sind die gegenüberliegenden Enden der Haltefinger als Teil einer topfartigen Aufnahmebuchse mit Versteifungsstegen versehen, die innenumfangseitig mit dem Stützrohr des Filterelementes in Anlage sind. Auch bei der dahingehenden Lösung kann es trotz der außenumfangseitig angeordneten Versteifungsstege ungewollt zu einem Abbrechen des jeweiligen Haltefingers kommen, insbesondere in Bereichen der Verjüngung an der Stelle des Überganges zu der zuordenbaren Rastnase.

Zwar ist bei einer Stützrohrlösung nach der DE 42 14 500 A im Sinne eines kennzeichnenden Merkmales des Patentanspruches 1 bereits vorgeschlagen worden, die Haltefinger an ihren einander zugewandten Innenseiten jeweils im Bereich der Rastnasen von einer konvexen Krümmung in eine konkave Krümmung in Richtung des Filterelementes übergehen zu lassen; allein der dahingehend genannte Übergang führt zu einer Verjüngung des jeweiligen Haltefingers an der Stelle des Überganges zum eigentlichen Stützrohr, so daß insoweit wiederum eine Schwachstelle vorhanden ist, die beim Ein- und Ausrasten des Stützrohres mit Teilen des Ventilgehäuses zum ungewollten Abbrechen der Haltefinger führen kann.

Ausgehend von diesem Stand der Technik stellt sich die vorliegende Erfindung daher die Aufgabe, eine Filtervorrichtung der in Betracht stehenden Art zu schaffen, die sich durch eine besonders einfache Bauweise der Halteeinrichtung für das Filterelement und dementsprechend niedrigen Herstellungskosten auszeichnet sowie montagefreundlich ist und die im Bereich der Schnappverbindung nicht zu Versagen neigt. Eine dahingehende Aufgabe löst eine Filtervorrichtung mit den Merkmalen des Patentanspruches 1 in seiner Gesamtheit.

Dadurch, dass gemäß dem kennzeichnenden Teil des Patentanspruches 1 die Haltefinger sich in Richtung des Filterelementes, beginnend bei den Rastnasen, stetig verbreitern, dass die Haltefinger an ihren einander zugewandten Innenseiten jeweils im Bereich der Rastnasen von einer konvexen Krümmung in eine konkave Krümmung in Richtung des Filterelementes übergehen, und dass eine sich konzentrisch zur Längsachse des Stützrohres erstreckende, im Umriß kreisrunde Hülse mit Hülsenteilen vorhanden ist, die durch Lücken voneinander getrennt die Haltefinger bilden, ist auf der einen Seite eine sehr einfache Bauweise für die Halteeinrichtung des Filterelementes erreicht, so dass sich in erstrebter Weise sehr niedrige Herstellungskosten ergeben. Auf der anderen Seite besteht ein weiterer Vorteil der erfindungsgemäßen Filtervorrichtung darin, dass sie auf bequeme und einfache Weise bedient und gewartet werden kann, weil Einbau und Austausch von Filterelementen durch einfaches Einrasten bzw. Lösen einer Schnappverbindung erfolgt; es also genügt, ein betreffendes Filterelement axial im Filtergehäuse in Richtung auf den Topfboden bis zum Einschnappen der Schnappverbindung zu bewegen oder zum Ausbau aus dem topfartigen Gehäuse herauszuziehen. Die Verbreiterung der jeweiligen Querschnittsform der Haltefinger sowie der genannte Wechsel in der Krümmungsrichtung begünstigen darüber hinaus die dahingehende Einrast- und Löseverbindung und es kommt nicht zum Abbrechen der Haltefinger und damit zum Versagen der Schnappverbindung, wozu der Aufbau der Haltefinger aus den genannten, auf Lücke gesetzten Hülsenteilen mit beiträgt. Die erfindungsgemäße Filtervorrichtung ist also demgemäß funktionssicher, auch wenn es beim Einsetzen des Filterelementes ungewollt zu einem Verkanten vor Einrasten der Schnappverbindung kommen sollte.

Bei einer weiteren, besonders bevorzugten Ausführungsform der erfindungsgemäßen Filtervorrichtung gehen die konkav gekrümmten Bereiche der Haltefinger in eine ebene Haltefläche über, die Bestandteil einer Endkäppe des Filterelementes ist. Dergestalt ergibt sich ein dorn- oder zapfenartiger Hohlraum begrenzt von den einzelnen Haltefingern und der Übergang zu der ebenen Haltefläche erlaubt mit den verbreiterten Querschnitten am dahingehenden Ende der Haltefinger eine Art Gelenkbildung, die die Einund Ausschwenkvorgänge der Haltefinger an ihrem Fußteil erleichtert.

Bei dem Filterelement handelt es sich vorzugsweise um eine Filterpatrone mit einem von Filtermaterial umgebenen, fluiddurchlässigen Stützrohr und einer an dessen bodenseitigem Ende befindlichen, den Rand des Filtermaterials einfassenden Endkappe, von deren Unterseite die Haltefinger vorstehen. Bei einer besonders vorteilhaften Bauweise sind hierbei das Stützrohr, die Endkappe und die Haltefinger einstückig aus Kunststoff preßgeformt.

Die als gehäuseseitiges Halteelement vorgesehene Aufnahme weist vorzugsweise eine im Boden des Filtergehäuses konzentrisch zu dessen Längsachse ausgebildete Vertiefung auf, die zur Bildung der Rastfläche in einem Abstand von ihrem Mündungsrand durch eine Ringnut erweitert ist, wobei vorzugsweise der Mündungsrand eine das Überlaufen durch die Rastnasen der Haltefinger erleichternde Abrundung aufweist, so dass beim Einsetzen des Filterelementes kein übermäßig großer Kraftaufwand erforderlich ist, um die Schnappverbindung herzustellen.

Um den Kraftaufwand für das Lösen der Schnappverbindung bei einem Auswechseln des Filterelementes auf einen geeigneten Wert zu begrenzen, kann auch die Ringnut an ihrer dem Mündungsrand der Vertiefung benachbarten Seitenwand eine das Ausheben der Rastnasen erleichternde Abschrägung aufweisen.

Bei einem besonders vorteilhaften Ausführungsbeispiel der erfindungsgemäßen Filtervorrichtung weist der die Vertiefung umgebende Bodenteil des Filtergehäuses einen gegenüber der Normalebene zur Längsachse schrägen Verlauf auf, so dass der Boden des Filtergehäuses oder -topfes zumindest in Teilbereichen einen eine schiefe Ebene definierenden Verlauf besitzt.

Dieser Schrägverlauf des Bodens hat in zweifacher Hinsicht eine Sicherheitsfunktion. Da der Mündungsrand der Vertiefung im Boden an diametral zueinander entgegengesetzten Bereichen ein unterschiedliches "Höhenniveau" besitzt, ergibt sich, wenn das Filterelement beim Einsetzen nicht richtig in die Aufnahme eingedrückt ist, die Schnappverbindung also nicht richtig hergestellt ist, eine Schrägstellung des Filterelementes im Filtergehäuse, weil die Enden seiner Haltefinger auf unterschiedlichem "Höhenniveau" am Boden des Gehäuses anliegen. Dieses Kippen des Filterelementes im Filtergehäuse ist vom Bediener nicht zu übersehen, d.h. es wird vom Bediener spätestens bemerkt, wenn er den Deckel des Filtergehäuses anzubringen sucht. Üblicherweise wird beim Anbringen des Deckels ein Anschlußstutzen mit dem zugewandten, oberen Ende des Filterelementes in Eingriff gebracht. Da dies bei verkantetem Filterelement nicht möglich ist, läßt sich der Gehäusedeckel in diesem Falle nicht anbringen.

Die zweite Sicherheitsfunktion der Bodenschräge besteht darin, dass auch die Gefahr vermieden wird, dass ein bauartfremdes Filterelement versehentlich eingebaut wird. Bei dem Versuch, ein Filterelement einzubauen, das keine zur Bildung einer Schnappverbindung dienende, in die Bodenvertiefung des Gehäuses einführbare Haltefinger aufweist, kommt es durch Anlage des unteren Endes eines solchen Filterelementes ebenfalls zu dessen Schrägstellung im Gehäuse, so dass dem Bediener auch dieser Fehlerzustand in entsprechender Weise zur Kenntnis gebracht wird.

Nachstehend ist die Erfindung anhand eines in der Zeichnung dargestellten Ausführungsbeispiels im einzelnen erläutert.
Es zeigen:
- Fig.1: einen verkürzt und schematisch vereinfacht gezeichneten Längsschnitt eines Ausführungsbeispiels der erfindungsgemäßen Filtervorrichtung;
- Fig.2: einen gegenüber Fig.1 in größerem Maßstab gezeichneten Teillängsschnitt lediglich des bodenseitigen Bereiches des Ausführungsbeispiels und
- Fig.3: einen Teilquerschnitt des Ausführungsbeispiels entsprechend der Schnittlinie III - III von Fig.2.

Ein Filtergehäuse 1 in Form eines in seinem Umriß zur Längsachse 3 rotationssymmetrischen Topfes weist ein offenes, oberes Ende 5 sowie einen geschlossenen Boden 7 auf. Am oberen Ende 5 befindet sich ein Außengewinde 9, mit dem ein Innengewinde 11 eines Gehäusedeckels 13 verschraubbar ist. Das topfartige Gehäuse 1 ist zur Aufnahme eines Filterelementes in Form einer als Ganzes mit 15 bezeichneten Filterpatrone vorgesehen, die in üblicher Weise ein kreiszylindrisches, inneres Stützrohr 17 mit Fluiddurchlässen 19 aufweist, das von Filtermaterial 21 umgeben ist. Beim vorliegenden Beispiel weist die Filterpatrone 15 ein dem Boden 7 des Filtergehäuses 1 zugeordnetes unteres Ende auf, das durch eine Endkappe 23 geschlossen ist, die auch eine Einfassung für den zugewandten Endrand des Filtermaterials 21 bildet. Die Endkappe 23 ist mit dem Stützrohr 17 einstükkig aus Kunststoff preßgeformt. An seinem dem oberen Ende 5 des Filtergehäuses 1 zugeordneten Ende ist das Stützrohr 17 durch eine ebenfalls aus Kunststoff preßgeformte Kopfkappe 25 verlängert, die ebenfalls eine Randeinfassung für den angrenzenden Rand des Filtermaterials 21 sowie eine Anschlußmuffe 27 bildet. Beim Aufschrauben des Deckels 13 auf das Filtergehäuse 1 kommt ein Stutzen 29, welcher einen Auslaßkanal für gefiltertes Fluidum bildet, mit der Anschlußmuffe 27 in Eingriff, um die Fluidverbindung mit dem Innenraum des Stützrohres 17 herzustellen, wobei ein O-Ring 31 an der Anschlußmuffe 27 die Abdichtung zwischen Innenraum des Stützrohres 17 (der Reinseite) und der die Filterpatrone 15 umgebenden Schmutzseite des Filtergehäuses 1 herstellt. Der Einlaß für das zu filternde, verunreinigte Fluidum ins Innere des Filtergehäuses 1 ist in der Zeichnung nicht dargestellt.

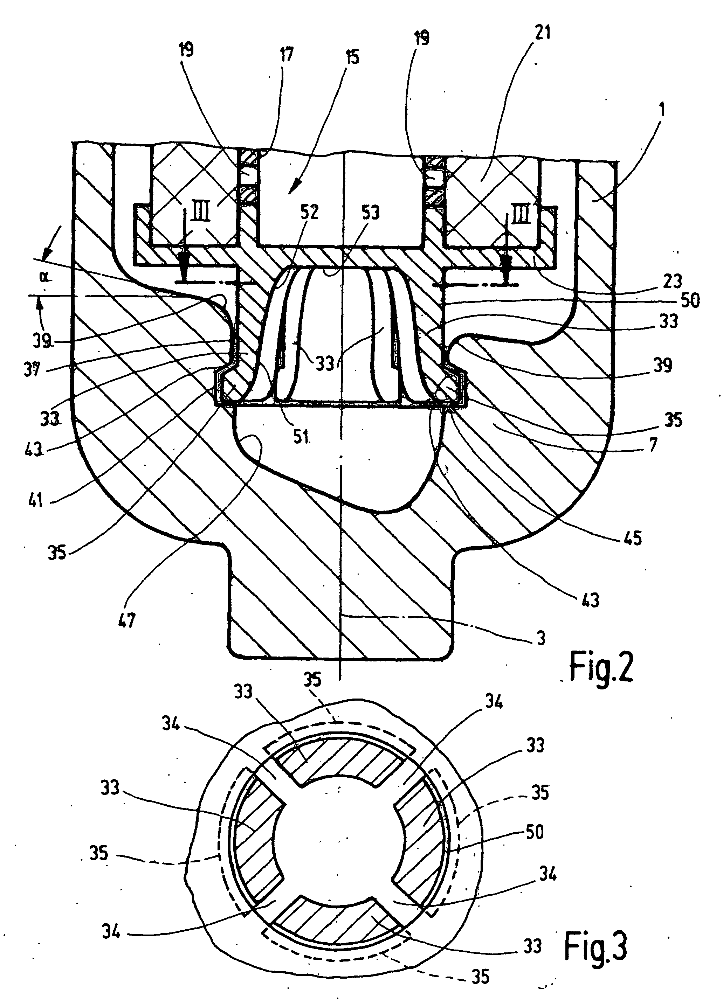

Die bei der Erfindung vorgesehene Halteeinrichtung zum lösbaren Festlegen der Filterpatrone 15 im Filtergehäuse 1 ist durch eine Schnappverbindung mit der Filterpatrone 15 zugehörigen Halteelementen und mit am Boden 7 des Filtergehäuses 1 ausgebildeten Halteelementen verwirklicht. Bei den der Filterpatrone 15 zugehörigen Halteelementen handelt es sich um nachgiebige Haltefinger 33, die von der Unterseite der Endkappe 23 der Filterpatrone 15 vorstehen und mit der Endkappe 23 einstückig geformt sind: Wie am deutlichsten aus Fig.2 und 3 zu ersehen ist, sind die Haltefinger 33 durch Wandteile einer zur Längsachse 3 konzentrischen, kreiszylindrischen Hülse gebildet, die an die Endkappe 23 angeformt ist, wobei die die Haltefinger 33 bildenden Wandteile durch Lücken 34 (s. Fig.3) voneinander getrennt sind.

An den freien Enden der Haltefinger 33 sind als Rastnasen dienende, radial vorspringende Rippen 35 angeformt. Die Haltefinger 33 wirken zur Bildung der Schnappverbindung mit einer am Boden 7 des Filtergehäuses 1 vorgesehenen Aufnahme zusammen, die eine Bodenvertiefung 37 aufweist, die in ihrem die Aufnahme bildenden Bereich konzentrisch zur Längsachse 3 ausgebildet ist. Diese Vertiefung 37 ist in einem Abstand von ihrem Mündungsrand 39 durch eine eine Hinterschneidung bildende Ringnut 41 erweitert, deren dem Mündungsrand 39 benachbarte Seitenwand 43 eine Rastfläche für die Zusammenwirkung mit einer passend geformten Anlagefläche der in die Ringnut 41 einschnappbaren, Rastnasen bildenden Rippen 35 bildet. Die Abschrägung der Seitenwand 43 und der zugeordneten Fläche der als Rastnasen dienenden Rippen 35 erleichtert das Lösen der Schnappverbindung.

Der Mündungsrand 39 der Bodenvertiefung 37 ist ebenfalls mit einer gerundeten Abschrägung versehen, um bei dem Einsetzen der Filterpatrone 15, wenn diese in Axialrichtung in das Filtergehäuse 1 eingeschoben wird, das Überlaufen des Mündungsrandes 39 durch die als Rastnasen dienenden Rippen 35 der Haltefinger 33 zu erleichtern. Die äußeren Enden der Rippen 35 bilden bei hergestellter Schnappverbindung Abstützflächen für die Filterpatrone 15 durch Anlage an einer Anschlagfläche 45, die durch die vom Mündungsrand 49 entfernte Seitenwand der Ringnut 41 gebildet ist und sich in einer zur Längsachse 3 senkrecht verlaufenden Ebene erstreckt, so dass eine ebene Abstützung der Filterpatrone 15 gegen Axialkräfte gegeben ist, die in Richtung auf den Boden 7 des Gehäuses 1 hin wirken.

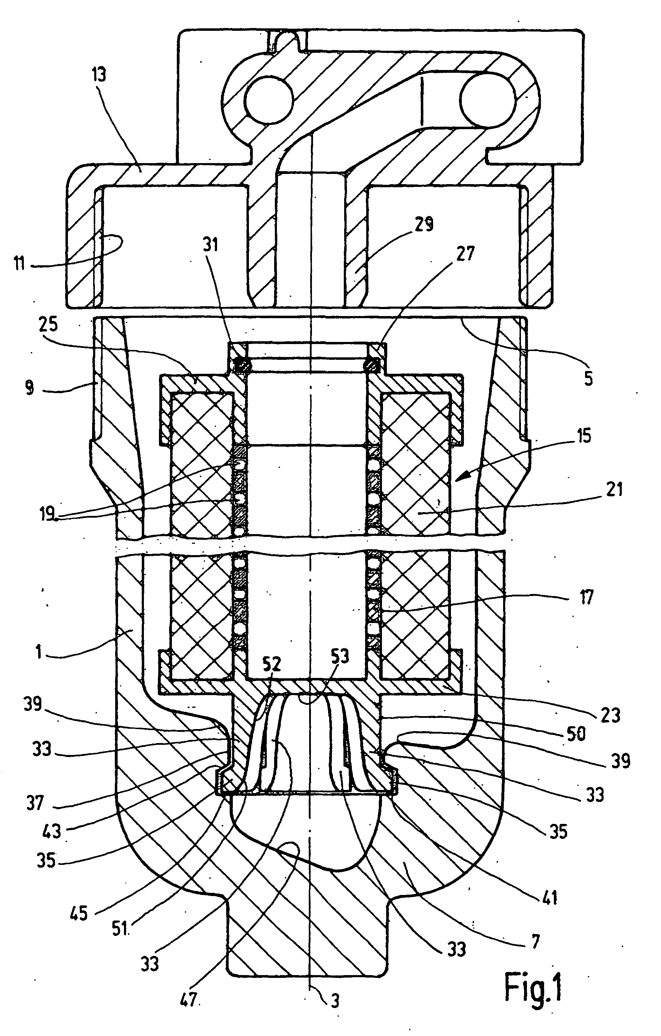

Die Vertiefung 37 ist unterhalb der Ringnut 41 durch einen Fortsatz 47 verlängert, der beim in der Zeichnung dargestellten Ausführungsbeispiel nicht rotationssymmetrisch ausgebildet ist. Wie den Fig.1 und 2 entnehmbar ist, weist der Fortsatz 47 eine Art Bodenschräge auf, so dass die tiefste Stelle zur Achse 3 versetzt gelegen ist.

Aufgrund der Abrundung, die am Mündungsrand 31 der als Aufnahme für die Haltefinter 33 dienenden Vertiefung 37 vorgesehen ist, läßt sich die Schnappverbindung beim Einsetzen der Filterpatrone 15 mit verhältnismäßig geringem Kraftaufwand herstellen. Die an der Seitenwand 43 der Ringnut 41 vorgesehene Abschrägung begrenzt die Kraft, die beim Auswechseln der Filterpatrone 15 für das Lösen der Schnappverbindung aufzuwenden ist, ebenfalls auf einen zweckmäßigen Wert.

Wie insbesondere aus Fig.2 zu ersehen ist, weist der den Mündungsrand 39 umgebende Teil des Bodens 7 des Filtergehäuses 1 einen Schrägverlauf auf, so dass der in der Zeichnung linksseitige Bereich des Mündungsrandes 39 auf einem höheren Niveau liegt als der rechtsseitig eingezeichnete Bereich des Mündungsrandes 39. In Fig.2 ist der Schrägverlauf der Bodenfläche gegenüber der Normalebene zur Längsachse 3 mit dem Winkel α kenntlich gemacht. Beim vorliegenden Beispiel liegt der Winkel α im Bereich von 3°. Es versteht sich, dass je nach den speziellen baulichen Gegebenheiten, beispielsweise der axialen Abmessung des Filtergehäuses 1 oder dessen Innendurchmesser im Verhältnis zum Außendurchmesser der Filterpatrone 15, auch andere Werte für den Betrag des Winkels der Bodenschräge in Betracht kommen.

Wie bereits oben erwähnt, hat die Bodenschräge eine Sicherheitsfunktion, weil diese Schräge bei den oben genannten Fehlerzuständen zu einem Kippen der Filterpatrone 15 im Gehäuse 1 führt. Dieses Kippen der Filterpatrone 15 wird vom Bediener visuell erkannt und/oder verhindert das Anbringen des Deckels 13, weil bei gekippter Filterpatrone 15 der Eintritt des dekkelseitigen Stutzens 29 in die Anschlußmuffe 27 an der Filterpatrone 15 blockiert ist.

Wie insbesondere die Längsschnittdarstellung der Filtervorrichtung nach der Fig.1 zeigt, ist die erfindungsgemäße Lösung dadurch charakterisiert, dass die Aufnahme 37 am Böden 7 des Filtergehäuses 1 angeordnet ist und dass die Haltefinger 33 an dem dem Boden 7 zugewandten Ende des Filterelementes 1 vorstehen. Des weiteren ergibt sich aus der dahingehenden Zeichnung, dass die Haltefinger 33 sich in Richtung des Filterelementes 15, beginnend bei den Rastnasen 35, im Querschnitt zu der Längsachse 3 des Filterelementes stetig verbreitern, wobei die Außenumfangsfläche der einzelnen Haltefinger 33 eine kreiszylindrische Umfangsfläche 50 ausbildet. Des weiteren gehen die Haltefinger 33 an ihren einander zugewandten Innenseiten jeweils im Bereich der Rastnasen 35 von einer konvexen Krümmung 51 in eine konkave Krümmung 52 in Richtung des Filterelementes 15 über. Durch den dahingehenden Krümmungswechsel ist ein besonders gutes Ein- und Ausschnappverhalten erreicht und durch die im Fußbereich im Querschnitt verbreiterten Haltefinger 33 ist sichergestellt, dass diese bei den Schnappvorgängen nicht ungewollt unter Lösen der Schnappverbindung abreißen können oder beschädigt werden. Die konkav gekrümmten Bereiche 52 der Haltefinger 33 gehen in eine ebene Haltefläche 53 über, die Bestandteil der Endkappe 23 des Filterelementes 15 ist. Die dergestalt im Fußbereich "freigeschnittenen" Haltefinger 33 erlauben dann in der Art einer Gelenkbewegung die notwendige Schwenkmöglichkeit für die skizzierten Rastvorgänge.

## Patentansprüche

1. Filtervorrichtung mit einem topfartigen Filtergehäuse (1), einem in diesem aufnehmbaren Filterelement (15) mit Stützrohr (17) und einer zum lösbaren Festlegen des Filterelementes (15) entlang seiner Längsachse (3) im Filtergehäuse (1) angeordneten Halteeinrichtung, die an der Innenseite des Filtergehäuses (1) und am Filterelement (15) ausgebildete, miteinander zusammenwirkende Halteelemente (37 bzw. 33) aufweist, wobei als Halteelemente eine am Filtergehäuse (1) befindliche Aufnahme (37) mit einer zumindest eine Rastfläche (43) bildenden Hinterschneidung (41) und an einem Ende des Filterelementes (15) vorstehende, nachgiebige Haltefinger (33) mit Rastnasen (35) vorgesehen sind, die durch Verrasten mit der Rastfläche (43) der Aufnahme (37) eine lösbare Schnappverbindung bilden, wobei die Aufnahme (37) am Boden (7) des Filtergehäuses (1) angeordnet ist, und wobei die Haltefinger (33) an dem dem Boden (7) zugewandten Ende des Filterelementes (1) vorstehen, **dadurch gekennzeichnet, dass** die Haltefinger (33) sich in Richtung des Filterelementes (15), beginnend bei den Rastnasen (35), stetig verbreitern, dass die Haltefinger (33) an ihren einander zugewandten Innenseiten jeweils im Bereich der Rastnasen (35) von einer konvexen Krümmung (51) in eine konkave Krümmung (52)in Richtung des Filterelementes (15) übergehen, und dass eine sich konzentrisch zur Längsachse (3) des Stützrohres (17) erstreckende, im Umriß kreisrunde Hülse mit Hülsenteilen vorhanden ist, die durch Lücken (34) voneinander getrennt die Haltefinger (33) bilden.

2. Filtervorrichtung nach Anspruch 1, **dadurch gekennzeichnet, dass** die konkav gekrümmten Bereiche (52) der Haltefinger (33) in eine ebene Haltefläche (53) übergehen, die Bestandteil einer Endkappe (23) des Filterelementes (15) ist.

3. Filtervorrichtung nach Anspruch 1 oder 2, **dadurch gekennzeichnet, dass** als Filterelement eine Filterpatrone (15) mit einem von Filtermaterial (21) umgebenen, fluiddurchlässigen Stützrohr (17) und der an dessen bodenseitigem Ende befindlichen, den Rand des Filtermaterials (21) einfassenden Endkappe (23) vorgesehen ist, von deren Unterseite die Haltefinger (33) vorstehen.

4. Filtervorrichtung nach Anspruch 3, **dadurch gekennzeichnet, dass** das Stützrohr (17), die Endkappe (23) und die Haltefinger (33) einstückig aus Kunststoff preßgeformt sind.

5. Filtervorrichtung nach einem der Ansprüche 1 bis 4, **dadurch gekennzeichnet, dass** die Aufnahme eine im Boden (7) des Filtergehäuses (1) konzentrisch zu dessen Längsachse (3) ausgebildete Vertiefung (37) aufweist, deren Mündungsrand (39) eine das Überlaufen durch die Rastnasen (35) der Haltefinger (33) erleichternde Abrundung aufweist, und dass die Vertiefung (37) zur Bildung der Rastfläche (43) in einem Abstand vom Mündungsrand (39) durch eine Ringnut (41) erweitert ist.

6. Filtervorrichtung nach einem der Ansprüche 1 bis 5, **dadurch gekennzeichnet, dass** die, bezogen auf die Längsachse (3) des Stützrohres (17), axiale Dicke der die Rastnasen bildenden Rippen (35) an die axiale Breite der Ringnut (41) der Vertiefung (37) angepaßt ist.

7. Filtervorrichtung nach Anspruch 6, **dadurch gekennzeichnet, dass** die vom Mündungsrand (39) der Vertiefung (37) entfernt gelegene Wand der Ringnut (41) eine in einer zur Längsachse (3) senkrecht verlaufenden Ebene liegende Anschlagfläche (45) zur Abstützung der Filterpatrone (15) am Boden (7) des Filtergehäuses (1) gegen einwirkende Axialkräfte bildet.

8. Filtervorrichtung nach Anspruch 7, **dadurch gekennzeichnet, dass** die dem Mündungsrand (39) der Vertiefung (37) nächstgelegene Wand (43) der Ringnut (41) und die zugewandte Fläche der die Rastnasen bildenden Rippen (35) eine deren Ausheben erleichternde Abschrägung besitzen.

9. Filtervorrichtung nach einem der Ansprüche 5 bis 8, **dadurch gekennzeichnet, dass** der die Vertiefung (37) umgebende Bodenteil des Filtergehäuses (1) zumindest in Teilbereichen, einen, bezogen auf die Längsachse (3), eine schiefe Ebene definierenden Verlauf besitzt.

10. Filtervorrichtung nach Anspruch 9, **dadurch gekennzeichnet, dass** der Neigungswinkel (α ) zwischen der schiefen Ebene und der Normalebene zur Längsachse (3) etwa 3° beträgt.

## Claims

1. Filter apparatus with a pot-like filter housing (1), a filter element (1) with a support pipe (17) to be inserted into the former, and a holding mechanism located along the longitudinal axis (3) within the filter housing (1) for the disconnectable affixing of the filter element (15), whereby the former incorporates co-operating holding elements (37, i.e. 33) on the inside of the filter housing (1) and on the filter element (15), and whereby a take-up (37) with a rear undercut (41) forming at least one arresting surface (43) located within the filter housing (1) as holding elements, and a yielding holding finger (33) with arresting sprockets (35) projecting at one end of the filter element (15) are envisaged, whereby the same form a disconnectable snap connection through an arresting with the arresting surface (43) of the take-up (37), and whereby the take-up (37) is located upon the floor (7) of the filter housing (1), and whereby the holding fingers (33) project at the end of the filter element (1) that faces in the direction of the floor (7), **characterised in that** the width of the holding fingers (33) continuously increases in the direction of the filter element (15) and commencing from the arresting sprockets (35), and **in that** the holding fingers (33) change from a convex arc (51) into a concave arc (52) upon the insides that face one another within the relevant area of the arresting sprockets (35) and in the direction of the filter element (15), and **in that** a sleeve with a circular cross-section and incorporating sleeve sections, which are separated by gaps (34) and which form the holding fingers (33), extends concentrically in relation to the longitudinal axis (3) of the support pipe (17).

2. Filter apparatus according to Claim 1, **characterised in that** the concave arc areas (52) of the holding fingers (33) change into a flat holding surface (53), which in turns forms a part of an end cap (23) of the filter element (15).

3. Filter apparatus according to Claim 1 or 2, **characterised in that** the filter element consists of a filter cartridge (15) with a fluid permeable support pipe (17) surrounded by the filter material (21) as well as the end cap (23) located at the floor end of the same and enclosing the edge of the filter material (21), whereby the holding fingers (33) project from the lower end of the same cap.

4. Filter apparatus according to Claim 3, **characterised in that** the support pipe (17), the end cap (23), and the holding fingers (33) are pressure moulded to form one plastic component.

5. Filter apparatus according to one of the preceding Claims 1 to 4, **characterised in that** the take-up incorporates a recess (37) within the floor (7) of the filter housing (1), whereby the same extends concentrically in relation to the longitudinal axis (3) of the same, and whose opening rim (39) incorporates a rounding facilitating the transition through the arresting sprockets (35) of the holding fingers (33), and **in that** the recess (37) for the creation of the arresting surface (43) is extended by a circular groove (41) at a distance from the opening rim (39).

6. Filter apparatus according to one of the preceding Claims 1 to 5, **characterised in that** the axial thickness of the ribs (35) that form the arresting sprockets are matched to the axial width of the circular groove (41) of the recess (37) in relation to the longitudinal axis (3) of the support pipe (17).

7. Filter apparatus according to Claim 6, **characterised in that** the wall of the circular groove (41) located at the far end of the opening rim (39) of the recess (37)
forms a vertical plane in relation to the longitudinal axis (3), representing an abutment surface (45) for the support of the filter cartridge (15) upon the floor (7) of the filter housing (1) against incoming axial forces.

8. Filter apparatus according to Claim 7, **characterised in that** the wall (43) of the circular groove (41) that is nearest to the opening rim (39) of the recess (37) and the facing surface of the ribs (35) that form the arresting sprockets incorporate an incline which facilitates the removal of the same.

9. Filter apparatus according to one of the preceding Claims 5 to 8, **characterised in that** the floor section of the filter housing (1) surrounding the recess (37) incorporates at least in parts a surface defining an inclined plane in relation to the longitudinal axis (3).

10. Filter apparatus according to Claim 9, **characterised in that** the angle of inclination (α) between the inclined plane and the normal plane is approximately 3° in relation to the longitudinal axis (3).

## Revendications

1. Dispositif de filtration avec un carter de filtre (1) de type cuve, un élément filtrant (15) pouvant être compris dans celui-ci avec un tube support (17) et un dispositif de maintien disposé dans le carter de filtre (1) permettant de fixer l'élément filtrant (15) de manière amovible le long de son axe longitudinal (3), lequel dispositif comprend des éléments de maintien (37 et/ou 33) concourants les uns avec les autres et conçus sur la face intérieure du carter de filtre (1) et sur l'élément filtrant (15), sachant que sont prévus comme éléments de maintien une admission (37) se trouvant dans le carter de filtre (1) avec un dégagement (41) formant au moins une surfacé d'encliquetage (43) et des doigts de maintien (33) souples dépassant d'une extrémité de l'élément filtrant (15) avec des encliquetages (35), qui forment un assemblage à encliquetage amovible par enclenchement avec la surface d'encliquetage (43) de l'admission (37), sachant que l'admission (37) est disposée au fond (7) du carter de filtre (1), et que les doigts de maintien (33) dépassent de l'extrémité de l'élément filtrant (1) orientée vers le fond (7), **caractérisé en ce que** les doigts de maintien (33) s'élargissent de façon continue en direction de l'élément filtrant (15), en commençant par les encliquetages (35), que les doigts de maintien (33) passent, sur leurs faces intérieures orientées les unes vers les autres, respectivement d'une courbure convexe (51) à une courbure concave (52) en direction de l'élément filtrant (15) dans la zone des encliquetages (35), et qu'il y a une douille de profil rond s'étendant de manière concentrique vers l'axe longitudinal (3) du tube support (17) avec des pièces de douille, qui forment les doigts de maintien (33) grâce à des orifices (34) grâce à des orifices séparés le uns des autres.

2. Dispositif de filtration selon la revendication 1, **caractérisé en ce que** les parties courbées de manière concave (52) des doigts de maintien (33) passent dans une surface de maintien (53) plane, qui fait partie d'un bouchon (23) de l'élément filtrant (15).

3. Dispositif de filtration selon la revendication 1 ou 2, **caractérisé en ce qu'**il est prévu comme élément filtrant une cartouche filtrante (15) avec un tube support (17) perméable entouré d'un matériau filtrant (21) et le bouchon (23) encerclant le bord du matériau filtrant (21) et se trouvant à son extrémité sur la partie inférieure, bouchon dont les doigts de maintien (33) dépassent de sa partie inférieure.

4. Dispositif de filtration selon la revendication 3, **caractérisé en ce que** le tube support (17), le bouchon (23) et les doigts de maintien (33) sont en plastique et moulés par pression d'un seul tenant.

5. Dispositif de filtration selon l'une des revendications 1 à 4, **caractérisé en ce que** l'admission comprend un évidement (37) conçu au fond (7) du carter de filtre (1) de manière concentrique par rapport à son axe longitudinal (3), évidement dont le bord de l'embouchure (39) comprend un arrondi simplifiant le débordement via les encliquetages (35) des doigts de maintien (33), et que l'évidement (37) permettant la formation de la surface d'encliquetage (43) est élargi à une distance du bord de l'embouchure (39) via une gorge (41).

6. Dispositif de filtration selon l'une des revendications 1 à 5, **caractérisé en ce que** l'épaisseur axiale des nervures (35) formant les encliquetages, par rapport à l'axe longitudinal (3) du tube support (17), est adaptée à la largeur axiale de la gorge (41) de l'évidement (37).

7. Dispositif de filtration selon la revendication 6, **caractérisé en ce que** la paroi de la gorge (41) éloignée du bord de l'embouchure (39) de l'évidement (37) forme une surface de butée (45) se trouvant sur un plan perpendiculaire à l'axe longitudinal (3) pour supporter la cartouche filtrante (15) au fond (7) du carter de filtre (1) contre des forces axiales s'exerçant.

8. Dispositif de filtration selon la revendication 7, **caractérisé en ce que** la paroi (43) de la gorge (41) la plus proche du bord de l'embouchure (39) de l'évidement (37) et la surface orientée des rainures (35) formant les encliquetages possèdent un chanfrein facilitant leur enlèvement.

9. Dispositif de filtration selon l'une des revendications 5 à 8, **caractérisé en ce que** la partie inférieure du carter de filtre (1) entourant l'évidement (37) possède au moins sur une partie un écoulement définissant un plan incliné par rapport à l'axe longitudinal (3).

10. Dispositif de filtration selon la revendication 9, **caractérisé en ce que** l'angle d'inclinaison (α) entre le plan incliné et le plan normal s'élève à environ 3° par rapport à l'axe longitudinal (3).
